# EUROPEAN PATENT APPLICATION

(11) **EP 3 521 461 A1**
(43) Date of publication of application: **07.08.2019**
(21) Application number: 17855672.6
(22) Date of filing: 08.09.2017
(51) Int. Cl.: C22B 3/08, C22B 23/00

(54) **REACTION CONTAINER, AND LEACH TREATMENT METHOD FOR METAL RAW MATERIAL USING SAID REACTION CONTAINER**

(30) Priority: 29.09.2016 JP 2016191952
(71) Applicant: Sumitomo Metal Mining Co., Ltd., Tokyo 105-8716 (JP)
(72) Inventor: TACHIHARA Kazutoki, Tokyo 105-8716 (JP); KATO Atsushi, Tokyo 105-8716 (JP)
(74) Representative: Jones, Nicholas Andrew
(86) International application number: PCT/JP2017/032532
(87) International publication number: WO 2018/061714

(57) **Abstract**

Provided is a method for effectively supplying oxygen to a slurry with which a reaction container is loaded, and thereby effectively causing a leaching reaction, during a leaching treatment which is performed using an acid such as sulfuric acid, while blowing oxygen at high temperature and high pressure. This autoclave device 1 is for being loaded with an ore slurry, and performing a leaching treatment for leaching metals (Ni, Co) contained in the ore by adding sulfuric acid at high temperature and high pressure, and is provided with an oxygen blow pipe 13 for blowing oxygen to the ore slurry, wherein the oxygen blow pipe 13 is disposed such that an oxygen outlet 31A of the oxygen blow pipe 13 is located in a gas phase portion 11G in the autoclave device 1 which is loaded with the ore slurry.

## Description

### TECHNICAL FIELD

The present invention relates to a reaction container such as an autoclave device, and particularly to a reaction container for leaching a metal contained in a metal raw material at high temperature and high pressure using sulfuric acid and a leach treatment method for a metal raw material using the reaction container.

### BACKGROUND ART

As a hydrometallurgical method for recovering valuable metals such as nickel and cobalt from a low grade nickel oxide ore typified by a limonite ore or the like, a high pressure acid leaching (HPAL) method of leaching valuable metals by using an acid such as sulfuric acid at high temperature and high pressure is known.

Specifically, a hydrometallurgical process of obtaining a mixed sulfide of nickel and cobalt from a nickel oxide ore as a raw material by using an HPAL method includes, for example, a pre-treatment step of adjusting a particle size of a raw material ore to form a slurry, a leaching step of performing a leaching treatment by adding sulfuric acid to an ore slurry at high temperature and high pressure, a solid-liquid separation step of separating a leachate and a leach residue from a leach slurry, a neutralization step of subjecting the leachate to a neutralization treatment to remove impurities, a dezincification step of removing zinc in the leachate, a sulfuration step of adding a sulfurizing agent to the leachate subjected to dezincification treatment to generate a mixed sulfide of nickel and cobalt, and a detoxification step of detoxifying a post-sulfuration liquid (for example, see Patent Document 1).

In the aforementioned hydrometallurgical process, it is known that, in the leaching treatment (leaching step) based on the HPAL method, in addition to nickel and cobalt, other components, such as magnesium, aluminum, iron, and chromium, of elements contained in ore as a raw material are leached according to the following Formula (1).

MO + H₂SO₄ => MSO₄ + H₂O ··· (1)

(M: Ni, Co, Mg, Al, Fe, or Cr)

Of them, since iron existing as goethite [FeO(OH)] in the ore is precipitated as hematite [Fe₂O₃] by a hydrolysis reaction proceeding at a high temperature of 200°C or higher according to the following Formula (2), iron is hardly leached. As described above, iron in the ore is immobilized as hematite in an acid leaching treatment at high temperature and high pressure so that leaching of iron in the leachate can be suppressed. In this respect, it can be said that the acid leaching treatment is excellent as compared to a leaching treatment by a normal pressure leaching method.

Fe³⁺ + 3/2H₂O → 1/2Fe₂O₃ + 3H⁺ ··· (2)

As described above, the HPAL method is an excellent technique capable of selectively leaching nickel and cobalt from ore containing a large amount of iron, but it is difficult to completely suppress leaching of iron and iron is contained on the order of several g/L in the leachate.

Iron in the leachate exists as bivalent iron and trivalent iron, and an absolute amount and an abundance ratio thereof are controlled by an oxidation-reduction potential (ORP) in the leachate. For example, when the ORP is increased to about 540 mV, the existence form of iron is only trivalent iron, so that iron is immobilized as hematite while generating protons and thus iron does not almost exist. For this reason, when the leaching treatment is performed while the ORP is increased, an amount of sulfuric acid used can be reduced by generation of protons occurring by an immobilization reaction of immobilizing iron as hematite, and an amount of a neutralizing agent can be suppressed in the subsequent steps since iron does not exist. However, when the ORP is increased to be higher than above value, trivalent chromium is oxidized to harmful hexavalent chromium, which is not preferable. On the other hand, when the ORP is too low, an oxide coating film in metal lining of a facility is reduced to cause damage to the facility. As described above, in the leaching treatment, it is desirable that the ORP of a solution is appropriately adjusted.

However, the ORP is largely dependent on the composition of the ore to be subjected to the leaching treatment. For this reason, a technique capable of efficiently suppressing the leaching of iron while controlling the ORP is demanded.

With respect to such a technical problem, a method is proposed in which the leaching of iron can be effectively suppressed by controlling an ORP of a solution by blow addition of pure oxygen, in the leaching treatment by the HPAL method.

For example, Patent Document 2 proposes a technique in which, in an autoclave device in which a metal is leached by blowing gas such as compressed air through a gas blow pipe while a slurry is stirred with a stirrer, a gas discharge port of the gas blow pipe is disposed in the vicinity of the lowermost stage stirring blade of the stirrer and at each of upper and lower places of the stirring blade. According to such a method, it is possible to prevent solid matters from adhering to the stirring blades or the like and to adjust a flow rate of gas, so that a reaction speed and a leaching rate can be improved.

However, in the technique described in Patent Document 2, the gas discharge port is positioned in the vicinity of the lowermost stage stirring blade. That is, a pipe that blows gas such as compressed air is inserted in a liquid phase of the slurry with which a compartment of the autoclave is loaded and the gas is blown directly to the liquid phase. In such a method, although the ORP can be controlled by gas such as compressed air, the slurry containing sulfuric acid may reversely flow to the blow pipe side. When the reverse flow of sulfuric acid to the pipe occurs as described above, the gas for controlling the ORP cannot be effectively supplied and the amount of sulfuric acid supplied to a leaching reaction is reduced, which causes a decrease in leaching rate.

In addition, as another method, a method is considered in which a pipe that supplies gas such as oxygen (gas supply pipe) is connected to a supply pipe for sulfuric acid to be used in a leaching treatment (sulfuric acid supply pipe) and oxygen is supplied together with sulfuric acid into a slurry. However, also in the case of this method, sulfuric acid may reversely flow to the gas supply pipe side and a state of a gas-liquid mixed phase of gas (gaseous material) and liquid is created, so that the supply of the gas may be unstable.
Patent Document 1: Japanese Unexamined Patent Application, Publication No. 2005-350766
Patent Document 2: Japanese Unexamined Patent Application, Publication No. 2016-11442

### DISCLOSURE OF THE INVENTION

### Problems to be Solved by the Invention

The present invention is proposed in view of such circumstances, and an object thereof is to provide a method in which oxygen is effectively supplied to a slurry with which a reaction container is loaded, and thereby a leaching reaction can be effectively caused, during a leaching treatment which is performed using an acid such as sulfuric acid while blowing oxygen at high temperature and high pressure.

### Means for Solving the Problems

The present inventor has conducted intensive studies, and as a result, has found that the above-described problems can be solved by providing an oxygen blow pipe that blows oxygen in a reaction container and positioning an oxygen outlet in the oxygen blow pipe at a gas phase portion inside the reaction container, thereby completing the present invention.
(1) A first invention of the present invention is a reaction container in which a slurry of a metal raw material is loaded and a leaching treatment of leaching a metal contained in the metal raw material is performed by adding sulfuric acid at high temperature and high pressure, the reaction container including: an oxygen blow pipe that blows oxygen to the slurry, in which an oxygen outlet in the oxygen blow pipe is disposed to be positioned at a gas phase portion in the reaction container in which the slurry is loaded.
(2) A second invention of the present invention is the reaction container in the first invention, in which at least a wall surface inside the reaction container is made of titanium.
(3) A third invention of the present invention is the reaction container in the second invention, in which the oxygen outlet is disposed to be separated from the wall surface inside the reaction container and is disposed at a substantially intermediate point between the wall surface inside the reaction container and a liquid level of the slurry as a position in a height direction of the reaction container.
(4) A fourth invention of the present invention is a leach treatment method for a metal raw material in which a slurry of a metal raw material is loaded in a reaction container and a metal contained in the metal raw material is leached by adding sulfuric acid at high temperature and high pressure, the leach treatment method including: supplying oxygen to a gas phase portion in the reaction container in which the slurry is loaded toward a liquid level of the slurry.

### Effects of the Invention

According to the present invention, oxygen is effectively supplied to a slurry with which a reaction container is loaded, and thereby a leaching reaction can be effectively caused, during a leaching treatment which is performed using an acid such as sulfuric acid while blowing oxygen at high temperature and high pressure.

### BRIEF DESCRIPTION OF THE DRAWINGS

Fig. 1 is a flowchart illustrating a flow of a hydrometallurgical process of a nickel oxide ore by an HPAL method.
Fig. 2 is a diagram illustrating an example of a configuration of an autoclave device provided with an oxygen blow pipe.
Fig. 3 is a cross-sectional view illustrating an example of a configuration of the oxygen blow pipe.

### PREFERRED MODE FOR CARRYING OUT THE INVENTION

Hereinafter, a specific embodiment of the present invention (hereinafter, referred to as "the present embodiment") will be described in detail. Incidentally, the present invention is not limited to the following embodiment, and various modifications can be made within the range that does not change the spirit of the present invention.

### <<1. Outline>>

A reaction container according to the present invention is a reaction container in which a slurry of a metal raw material is loaded and a leaching treatment of leaching a metal contained in the metal raw material is performed by adding sulfuric acid at high temperature and high pressure. For example, as the slurry of the metal raw material, an ore slurry to be used in a hydrometallurgical process of recovering valuable metals such as nickel and cobalt from a nickel oxide ore can be exemplified. Further, as an autoclave device to be used in the leaching treatment in the hydrometallurgical process of the nickel oxide ore, the reaction container according to the present invention can be applied.

Specifically, this reaction container is provided with an oxygen blow pipe that blows oxygen to the slurry, and is characterized in that a leaching treatment can be performed while supplying a high concentration of oxygen, and an oxygen outlet in the oxygen blow pipe is disposed to be positioned at a gas phase portion in the reaction container in which the slurry is loaded.

According to such a reaction container, by supplying oxygen to the slurry through the oxygen blow pipe, an oxidation-reduction potential (ORP) of the slurry can be appropriately controlled to a desired range. Furthermore, since the oxygen outlet in the oxygen blow pipe is disposed to be positioned at the gas phase portion, the slurry containing sulfuric acid can be prevented from reversely flowing to the oxygen blow pipe side, and a degradation in leaching efficiency caused by supply shortage of oxygen, or the like can be prevented.

In addition, by disposing the oxygen outlet in the oxygen blow pipe to be separated from a wall surface inside the reaction container, damage in an inner wall or the like can be prevented and stable operation can be performed.

In the following description, the present invention will be described in more detail by using, as an example, a case where the reaction container according to the present invention is applied to an autoclave device to be used in the leaching treatment in the hydrometallurgical process of the nickel oxide ore using the HPAL method.

### <<2. Hydrometallurgical Process of Nickel Oxide Ore>>

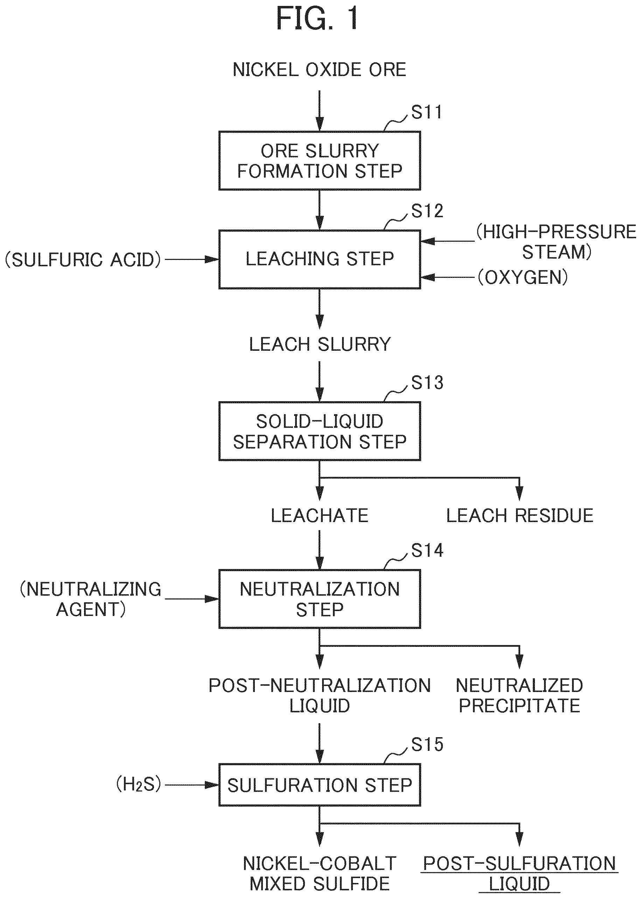

Fig. 1 is a flowchart illustrating a flow of a hydrometallurgical process of a nickel oxide ore by an HPAL method. The hydrometallurgical process of the nickel oxide ore includes an ore slurry formation step S11 of forming a slurry of an nickel oxide ore as a raw material, a leaching step S12 of leaching the slurry by sulfuric acid at high temperature and high pressure to obtain a leach slurry, a solid-liquid separation step S13 of solid-liquid separating the leach slurry into a leachate and a leach residue, a neutralization step S14 of adding a neutralizing agent to the leachate to obtain a neutralized precipitate containing impurities and a post-neutralization liquid, and a sulfuration step S15 of adding a sulfurizing agent to the post-neutralization liquid to obtain a mixed sulfide of nickel and cobalt and a post-sulfuration liquid.

### (1) Ore Slurry Formation Step

In the ore slurry formation step S11, the nickel oxide ore as a raw material ore is classified at a predetermined classifying point so that oversized ore particles are removed, and then water is added to undersized ore particles to obtain a coarse ore slurry.

The nickel oxide ore as a raw material is ore containing nickel and cobalt, and a so-called laterite ore such as a limonite ore and a saprolite ore is mainly used. The content of nickel in the laterite ore is typically 0.8% by weight to 2.5% by weight and is contained as hydroxide or silica-magnesia (magnesium silicate) mineral. Further, the content of iron is 10% by weight to 50% by weight and iron is mainly in the form of trivalent hydroxide (goethite); however, some bivalent iron is contained in silica-magnesia mineral. Further, in addition to such a laterite ore, an oxide ore containing valuable metals such as nickel, cobalt, manganese, and copper, for example, manganese nodules existing at the bottom of the deep part of the sea, or the like is used.

The method for classifying the nickel oxide ore is not particularly limited as long as it can classify ores on the basis of a desired particle diameter, and for example, the classification can be performed by sieve classification using a grizzly sieve, a grizzly sieve, or the like. Further, the classifying point is also not particularly limited, and a classifying point for obtaining an ore slurry composed of ore particles having a desired particle diameter value or less can be appropriately set.

### (2) Leaching Step

In the leaching step S12, a leaching treatment of leaching nickel and cobalt contained in ore is performed by adding sulfuric acid to an ore slurry while supplying high-pressure steam to perform pressurization, for example, under a high temperature condition of 240°C to 260°C, using a high temperature pressurizing reaction container (such as an autoclave device). According to this leaching treatment, a leach slurry which contains a leachate containing nickel and cobalt and a leach residue containing hematite is generated.

Herein, although described later in detail, in the leaching treatment in the leaching step S12, a metal is leached by sulfuric acid while supplying oxygen to the slurry. Specifically, an oxygen blow pipe that supplies a high concentration of oxygen is provided in the autoclave device, and then oxygen is supplied to a gas phase portion in the autoclave device in which the ore slurry is loaded. By performing the leaching treatment while supplying a high concentration of oxygen in this way, an oxidation-reduction potential (ORP) of the slurry can be controlled, and leaching of iron contained in ore is suppressed, so that a leaching rate of nickel and cobalt can be improved.

### (3) Solid-Liquid Separation Step

In the solid-liquid separation step S13, multistage washing is applied to the leach slurry generated in the leaching step S12 to solid-liquid separate the leach slurry into a leachate containing nickel and cobalt and a leach residue as hematite.

In the solid-liquid separation step S13, the leach slurry is mixed with a washing liquid, and then a solid-liquid separation treatment is performed using a solid-liquid separation apparatus such as a thickener. Specifically, first, the slurry is diluted by a washing liquid, and then, the leach residue in the slurry is condensed as a precipitate in a thickener. According to this, the amount of nickel adhering to the leach residue can be decreased depending on the degree of the dilution. In actual operations, thickeners having such a function are multistage-connected and used.

### (4) Neutralization Step

In the neutralization step S14, the pH is adjusted by adding a neutralizing agent to the leachate, thereby obtaining a neutralized precipitate containing an impurity element and a post-neutralization liquid. According to such a neutralization treatment, valuable metals such as nickel, cobalt, and scandium are contained in the post-neutralization liquid, and the most part of impurities including aluminum becomes the neutralized precipitate.

As a neutralizing agent to be used in the neutralization treatment, a known neutralizing agent can be used. Examples thereof include limestone, slaked lime, and sodium hydroxide. Further, in the neutralization treatment, the pH is preferably adjusted to a range of 1 to 4 and more preferably to a range of 1.5 to 2.5 while preventing oxidation of the separated leachate. When the pH is less than 1, neutralization may be insufficient, and the neutralized precipitate and the post-neutralization liquid may not be separated. On the other hand, when the pH is more than 4, not only impurities including aluminum but also valuable metals such as nickel may be contained in the neutralized precipitate.

### (5) Sulfuration Step

In the sulfuration step S15, a sulfurizing agent is added to the post-neutralization liquid obtained from the neutralization treatment in the neutralization step S14 to obtain a mixed sulfide of nickel and cobalt and a post-sulfuration liquid. According to such a sulfuration treatment, nickel, cobalt, zinc, and the like are recovered as sulfides, and other element such as scandium remains in the post-sulfuration liquid.

Specifically, in the sulfuration step S15, a sulfurizing agent such as hydrogen sulfide gas, sodium sulfide, or hydrogenated sodium sulfide is added to the obtained post-neutralization liquid to generate a mixed sulfide containing nickel and cobalt with less impurity components (nickel-cobalt mixed sulfide) and a post-sulfuration liquid (barren liquor) having a low and stabilized level of concentration of nickel or the like.

In the sulfuration treatment in the sulfuration step S15, a slurry containing the nickel-cobalt mixed sulfide is subjected to a separation treatment using a precipitation apparatus such as a thickener to separate and recover the mixed sulfide from the bottom of the thickener. Meanwhile, the post-sulfuration liquid as an aqueous solution component is overflowed for recovery.

Incidentally, in a case where zinc is contained in the post-neutralization liquid to be provided to the sulfuration treatment, before separating nickel and cobalt as sulfides, zinc can be selectively separated as a sulfide.

### <<3. Reaction Container (Autoclave Device) to Be Used in Leaching Treatment>>

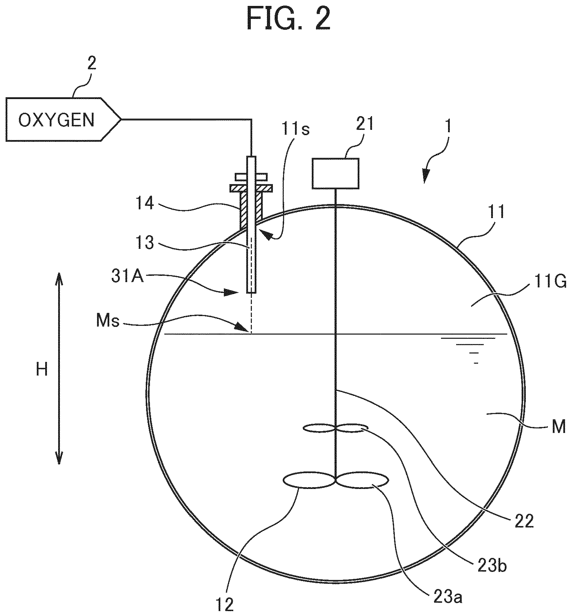

Fig. 2 is a diagram illustrating a configuration of an autoclave device to be used in the leaching treatment in the leaching step S12 in the aforementioned hydrometallurgical process, and is a longitudinal sectional side view schematically illustrating an internal structure obtained by vertically cutting the autoclave device.

### (Configuration of Autoclave Device)

An autoclave device 1 is a reaction container in which an ore slurry as a metal raw material is loaded and a leaching treatment of leaching a metal contained in the ore is performed by supply of sulfuric acid at high temperature and high pressure. This autoclave device 1 includes a main body portion 11 that has an ore slurry M loaded therein and is a leaching reaction field, and a stirrer 12 that stirs the ore slurry. In addition, an oxygen blow pipe 13 that blows oxygen to the ore slurry is provided in the autoclave device 1.

### (Main Body Portion)

As described above, the main body portion 11 has the ore slurry M loaded therein and is a reaction field in which the leaching reaction by sulfuric acid occurs. The main body portion 11 is, although not illustrated in the drawing, for example, partitioned in a plurality of compartments by partition walls, the leaching reaction occurs in each compartment, and the slurry is overflowed and transferred from the upstream compartment to the downstream compartment.

In the inside of the main body portion 11 (the inside of each compartment), for example, various supply pipes, such as a sulfuric acid supply pipe that supplies a sulfuric acid solution to be used in the leaching treatment while drooping from the upper portion of the main body portion, a slurry inlet pipe for loading an ore slurry to be treated in the compartment on the uppermost stream, and a steam supply pipe for supplying high-pressure steam or the like, are attached.

Herein, in the main body portion 11 of the autoclave device 1, although not particularly limited, at least the wall surface inside the main body portion (inner wall) is preferably made of a material containing titanium (Ti). Since the leaching reaction by sulfuric acid occurs at high temperature and high pressure as described above in the main body portion 11, the wall surface is preferably made of a material having corrosion resistance, and particularly, by the wall surface being made of Ti, corrosion resistance thereof can be enhanced.

### (Stirrer)

The stirrer 12 is disposed inside the main body portion 11, and for example, in a case where the inside of the main body portion 11 is partitioned in a plurality of compartments by partition walls, the stirrer 12 is disposed in each of the compartments. The stirrer 12 stirs the slurry loaded inside the main body portion 11.

As the stirrer 12, for example, as schematically illustrated in Fig. 2, it is possible to use a propeller-shaped stirrer provided with a stirring shaft 22 connected to a motor 21 and stirring blades 23 disposed at end portions of the stirring shaft. The stirrer 12 droops from the ceiling above the main body portion 11, and the stirring shaft 22 can be provided to be positioned at the center portion in the reaction space when the autoclave device 1 is viewed from the upper portion.

The stirrer 12 rotates the stirring shaft 22 at a predetermined speed, for example, clockwise by driving of the motor 21 and stirs the slurry by the stirring blades 23. As illustrated in Fig. 2, the stirring blades 23 (23a and 23b) can be provided in plural in the vertical direction in the end portions of the stirring shaft 22.

### (Oxygen Blow Pipe)

The oxygen blow pipe 13 is a pipe for blowing and supplying a high concentration of oxygen to the ore slurry. The oxygen blow pipe 13 is, for example, provided to droop from the ceiling above the main body portion 11. Specifically, the oxygen blow pipe 13 is provided to be fixed to a flange 14 provided at the upper portion of the main body portion 11. This oxygen blow pipe 13 is connected to an oxygen generating facility 2, and oxygen generated in the oxygen generating facility 2 is supplied into the main body portion 11 through the oxygen blow pipe 13.

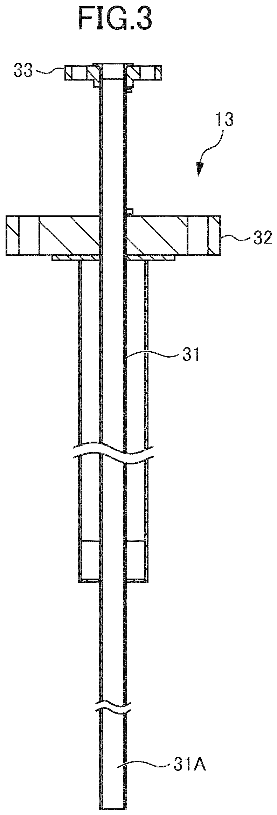

Fig. 3 is a cross-sectional view illustrating an example of a configuration of the oxygen blow pipe 13. As illustrated in Fig. 3, the oxygen blow pipe 13 is, for example, a nozzle-shaped pipe and is provided with a pipe portion 31, an attaching flange 32 that attaches and fixes the oxygen blow pipe 13 to the flange 14 at the upper portion of the main body portion 11, and a connecting flange 33 for connecting the oxygen blow pipe 13 to the oxygen generating facility 2. Incidentally, the attaching flange 32 and the connecting flange 33 are connected to counterpart flanges (the flange 14 at the upper portion of the main body portion 11 and a flange (not illustrated) provided in the oxygen generating facility 2) by bolt fastening, welding, or the like.

Herein, in the oxygen blow pipe 13, an oxygen outlet 31A exists at the distal end of the pipe portion 31 (end portion opposite to a connection portion with the oxygen generating facility 2), and oxygen is discharged from the oxygen outlet 31A. At this time, in the autoclave device 1, the oxygen blow pipe 13 is disposed such that the oxygen outlet 31A is positioned at a gas phase portion (space indicated by symbol "11G" in Fig. 2) in the main body portion 11 in which the slurry is loaded. That is, the oxygen outlet 31A is disposed in a state of not coming in contact with the liquid level of the slurry, and oxygen is blown from the oxygen outlet 31A positioned at the gas phase portion 11G toward the liquid level of the slurry in the main body portion 11.

In the autoclave device 1 having such a configuration, the oxygen outlet 31A of the oxygen blow pipe 13 is positioned at the gas phase portion 11G in the main body portion 11, so that oxygen is blown to the gas phase portion 11G and then oxygen blown to the gas phase portion 11G is gradually incorporated in the slurry so as to be dissolved. Therefore, for example, by controlling the amount of oxygen supplied through the oxygen blow pipe 13, the ORP of the slurry can be appropriately controlled in a desired range.

Further, since the oxygen outlet 31A of the oxygen blow pipe 13 is provided to be positioned at the gas phase portion 11G, unlike a related art in which the oxygen outlet in the oxygen blow pipe is inserted in a liquid phase and oxygen is blown directly to the liquid phase (for example, the technique described in Patent Document 2), a problem does not arise in that the slurry containing sulfuric acid or the like reversely flows in the pipe, so that a decrease in leaching rate of nickel and cobalt can be suppressed.

Further, in the autoclave device 1, since the leaching treatment is performed using sulfuric acid, for example, at a high temperature of 245°C or higher while oxygen is blown through the oxygen blow pipe 13, a possibility that corrosion occurs inside the autoclave device 1 is considered. For this reason, as for such an autoclave device 1 performing the leaching treatment, as described above, from the viewpoint of enhancing corrosion resistance, the autoclave device is preferably made of a material containing Ti.

However, it is known that, in the case of a reaction container made of Ti, when gas in which the oxygen concentration is increased is allowed to pass through the reaction container, the gas reaches an ignition point of Ti so that combustion occurs. For this reason, in a case where the device inner wall or the like in the autoclave device 1 is made of Ti, it is demanded that oxygen to be blown from the oxygen blow pipe 13 to the inside of the main body portion 11 is supplied without oxygen being brought into contact with the inner wall made of Ti.

For this reason, in the autoclave device 1, the oxygen outlet 31A of the oxygen blow pipe 13 is preferably disposed to be separated from the wall surface inside the main body portion 11 of the autoclave device 1. Specifically, as illustrated in Fig. 2, the oxygen outlet 31A is preferably disposed at a substantially intermediate point between a wall surface 11s in the main body portion 11 and a liquid level Ms of the slurry as a position in a height direction (arrow H direction in Fig. 2) of the autoclave device 1.

The gas phase portion 11G in the main body portion 11 of the autoclave device 1 is made of a mixed gas of steam and an inert gas of over pressure content (such as N₂, O₂, or generated CO₂), but the most part thereof is steam and the average molecular weight is estimated to be about 20. Meanwhile, since oxygen to be supplied through the oxygen blow pipe 13 has a large specific gravity and is cold, when oxygen is supplied to the gas phase portion 11G inside the main body portion 11 toward the liquid level of the slurry, oxygen flows in the liquid level direction directly. Therefore, oxygen to be supplied is not brought into direct contact with the wall surface inside the autoclave device 1, that is, the wall surface made of Ti.

As the material of the oxygen blow pipe 13, from the viewpoint of securing corrosion resistance at high temperature and high pressure and preventing combustion by oxygen passing in the pipe, for example, a nickel-chromium-molybdenum (Ni-Cr-Mo) alloy is preferably used. The Ni-Cr-Mo alloy optionally includes manganese, silicon, cobalt, tungsten, tantalum, iron, and the like, and examples thereof include 58Ni-22Cr-13Mo-3W-3Fe (commercially available product: HASTELLOY C-22), 60Ni-19Cr-19Mo-2Ta (commercially available product: MAT21), and 53Ni-45Cr-1Mo (commercially available product: MC Alloy).

### EXAMPLES

Hereinafter, the present invention will be described in more detail by means of Examples of the present invention, but the present invention is not limited to the following Examples at all.

### [Example 1]

In the leaching step in the hydrometallurgical process of the nickel oxide ore using the HPAL method, the leaching treatment by sulfuric acid was performed using the autoclave device 1 as illustrated in Fig. 2.

That is, as illustrated in Fig. 2, as the autoclave device (inside dimensions of the case: diameter 5 m × length 25 m) 1, an autoclave device provided with the main body portion 11, the stirrer 12, and the oxygen blow pipe 13 was used. The inner wall of the main body portion 11 of the autoclave device 1 was made of Ti. Further, the flange 14 was provided at the upper side of the outer portion thereof and then the oxygen blow pipe 13 was fixed and attached to the flange 14. An ore slurry was loaded in the main body portion 11 of such an autoclave device 1 such that the height of liquid level of the slurry became 4200 mm.

As the oxygen blow pipe 13, the oxygen outlet 31A positioned at the distal end portion thereof was provided to be disposed at a height position of 290 mm from the upper wall surface of the main body portion 11. At this time, the distance between the liquid level of the slurry and the oxygen outlet 31A was 170 mm, and thus the oxygen outlet 31A was allowed to blow oxygen to the gas phase portion 11G in the main body portion 11. Incidentally, as the oxygen blow pipe 13, an oxygen blow pipe having the shape and configuration as illustrated in Fig. 3 was used and was made of a nickel base alloy. Further, the length of the pipe portion 31 of the oxygen blow pipe 13 was set to 1170 mm.

The leaching treatment by sulfuric acid was performed using such an autoclave device 1 while supplying oxygen toward the liquid level of the slurry. Incidentally, conditions at the time of the leaching treatment are described below.

### (Oxygen Supply Condition)

Gas flow rate: 90 Nm³/h/train
Oxygen concentration: 90%
(Sulfuric Acid Leaching Operation Condition)
A/C temperature: 259 degC (steam pressure: 4,620 kPaA)
A/C pressure: 5,200 kPaA (excessive pressure: 400 to 500 kPa)

As a result of performing the operation for five months, the reverse flow of the slurry containing sulfuric acid was not observed in the oxygen blow pipe 13, and breakage in the inner wall or the like of the main body portion 11 of the autoclave device 1 was also not confirmed. That is, it was possible to maintain the state without any change from the state at the start of the operation.

### EXPLANATION OF REFERENCE NUMERALS

- 1: AUTOCLAVE DEVICE
- 11: MAIN BODY PORTION
- 12: STIRRER
- 13: OXYGEN BLOW PIPE
- 14: FLANGE
- 31: PIPE PORTION (IN OXYGEN BLOW PIPE)
- 31A: OXYGEN OUTLET

## Claims

1. A reaction container in which a slurry of a metal raw material is loaded and a leaching treatment of leaching a metal contained in the metal raw material is performed by adding sulfuric acid at high temperature and high pressure, the reaction container comprising:
an oxygen blow pipe that blows oxygen to the slurry, wherein
an oxygen outlet in the oxygen blow pipe is disposed to be positioned at a gas phase portion in the reaction container in which the slurry is loaded.

2. The reaction container according to claim 1, wherein at least a wall surface inside the reaction container is made of titanium.

3. The reaction container according to claim 2, wherein the oxygen outlet is disposed to be separated from the wall surface inside the reaction container and is disposed at a substantially intermediate point between the wall surface inside the reaction container and a liquid level of the slurry as a position in a height direction of the reaction container.

4. A leach treatment method for a metal raw material in which a slurry of a metal raw material is loaded in a reaction container and a metal contained in the metal raw material is leached by adding sulfuric acid at high temperature and high pressure, the leach treatment method comprising:
supplying oxygen to a gas phase portion in the reaction container in which the slurry is loaded toward a liquid level of the slurry.
